# EUROPÄISCHE PATENTSCHRIFT

(11) **EP 1 364 149 B1**
(45) Veröffentlichungstag und Bekanntmachung des Hinweises auf die Patenterteilung: **26.04.2006**
(21) Anmeldenummer: 02709961.3
(22) Anmeldetag: 13.02.2002
(51) Int. Cl.: F16L 37/38

(54) **STECKBARE SICHERHEITSKUPPLUNG**
PLUG-IN SAFETY COUPLING
RACCORD DE SECURITE ENFICHABLE

(30) Priorität: 01.03.2001 CH 381012001
(43) Veröffentlichungstag der Anmeldung: 26.11.2003
(73) Patentinhaber: Hans Oetiker AG Maschinen- und Apparatefabrik, 8812 Horgen (CH)
(72) Erfinder: WÜTHRICH, Albrecht, CH-6110 Wolhusen (CH)
(74) Vertreter: Strehl Schübel-Hopf & Partner
(86) Internationale Anmeldenummer: PCT/CH2002/000085
(87) Internationale Veröffentlichungsnummer: WO 2002/070941

(56) Entgegenhaltungen:
- EP-A- 0 327 494
- EP-A- 0 406 203
- EP-A- 0 632 872

## Beschreibung

Die vorliegende Erfindung betrifft eine Sicherheitskupplung für Druckleitungen, mit einem Kupplungsstecker und einem Kupplungsgehäuse gemäss Oberbegriff des Patentanspruches 1.

Aus der EP-B-0'598'077 ist eine steckbare Sicherheitskupplung gemäss Oberbegriff des Patentanspruches 1 bekannt. Bei der bekannten Sicherheitskupplung ist im Kupplungsgehäuse eine Druckleitungseinführungsbohrung angebracht und ein Sperrelement mit Dichtungsbohrung darin dichtend gelagert. In das Sperrelement ist ein Kupplungsstecker dichtend einführbar und dank einer vorhandenen Kulissenführung lässt sich der Kupplungsstecker mit dem Sperrelement von einer sperrenden Position in eine leitende Position schwenken. In der leitenden Position fluchtet die Druckleitungseinführungsbohrung mit einer Durchgangsbohrung im Sperrelement, in dem der Kupplungsstecker eingeführt ist. Der Kupplungsstecker weist eine Rückhalteschulter auf, die beim Verschwenken von der Einführungsposition in die leitende Position der Sicherheitskupplung auf der Innenseite des Kupplungsgehäuses zum Anliegen kommt. In der leitenden Stellung drückt somit der anliegende Druck des Druckmediums den Kupplungsstecker auf der Innenseite an das Kupplungsgehäuse. Die dabei anliegende Haftreibung ist direkt proportional zum anliegenden Druck. Die bekannte Kupplung gemäss der erwähnten Druckschrift EP-B-0'598'077 ist üblicherweise für Druckluftleitungen wie sie in Werkstätten üblich sind geeignet, bei denen ein Druck von wenigen bar anliegt. In diesem Bereich hat sich die bekannte steckbare Sicherheitskupplung vielfach bewährt. Auch für kleinere Dimensionen, wie sie beispielsweise bei pneumatischen Steuerungen verwendet werden, stellt die bekannte Sicherheitskupplung eine geeignete Lösung dar.

Eine Weiterentwicklung der obgenannten Lösung ist aus der EP-B-0'632'872 bekannt. In jener Lösung ist zusätzlich ein federbelastetes Arretiermittel vorgesehen, welches das schwenkbare Sperrorgan insbesondere in der leitenden Position zusätzlich verriegelt, um ein Entkoppeln zu verhindern, wenn die beiden miteinander verbundenen Leitungsenden so bewegt werden, dass unter Umständen ungewollt eine Entsicherung stattfinden würde.

Bei steckbaren Sicherheitskupplungen für Druckleitungen zur Uebertragung hoher Drücke werden oftmals muffenartige Verbindungen verwendet, die gegeneinander verschraubt werden müssen, Solche Verbindungen haben dann jedoch oftmals kein Sperrelement und können nur im entlasteten Zustand gekoppelt werden. Gerade im Bauwesen werden vielfach Kompressoren eingesetzt, mittels derer relativ hohe Drücke erzeugt werden. Die entsprechenden Druckschläuche haben einen relativ grossen Durchmesser. Entsprechend sind die auf den Kupplungen anliegenden Drücke hoch. Weil die Kupplungen oftmals starken Verschmutzungen ausgesetzt sind, vielfach Belastungen auftreten durch Fremdeinwirkungen, müssen entsprechend geeignete Kupplungen relativ einfach sein, hohen Sicherheitsbedingungen entsprechen und kostengünstig gefertigt werden können. Gerade im Bauwesen wird oftmals unter Zeitdruck gearbeitet. Entsprechend wäre es vorteilhaft, eine Sicherheitskupplung anzubieten, bei der die entsprechenden Druckschläuche auch unter anliegendem Arbeitsdruck gekoppelt oder entkoppelt werden können. Hierbei muss sichergestellt werden, dass im Bereich der Kupplung der Druck beim Entkuppeln vollständig abgebaut wird, so dass ein Restdruck das abgekoppelte Schlauchende nicht wegschleudert.

An sich wären die bekannten zuvor besprochenen Lösungen sicherheitstechnisch sowie auch bezüglich der konstruktiven Einfachheit und der kostengünstigen Fertigung geeignet, um auch im Bauwesen eingesetzt zu werden, es hat sich jedoch gezeigt, dass die anliegenden Drücke so hoch sind, dass nur mit grossem Kraftaufwand überhaupt eine Entkopplung möglich ist. Die Reibungskräfte zwischen dem Kupplungsstecker und dem Kupplungsgehäuse sind unter den herrschenden Druckkräften derart gross, dass nur äusserst kräftige Bedienungspersonen eine solche Kupplung entkuppeln können.

Es ist daher die Aufgabe der vorliegenden Erfindung, eine steckbare Sicherheitskupplung der eingangs genannten Art zu schaffen, bei der auch Druckleitungen mit grossem Kaliber und unter Anliegen eines hohen Druckes mit geringem Kraftaufwand entkuppelt werden können.

Diese Aufgabe löst eine steckbare Sicherheitskupplung mit den Merkmalen des Patentanspruches 1.

Weitere vorteilhafte Ausgestaltungsformen gehen aus den abhängigen Ansprüchen hervor und deren Bedeutung und Wirkungsweise ist in der nachfolgenden Beschreibung unter Bezug auf die beiliegenden Zeichnungen erläutert.

Es zeigt:
- Figur 1: einen Axialschnitt durch die erfindungsgemäss steckbare Sicherheitskupplung im gekoppelten Zustand;
- Figur 2: eine Explosionszeichnung der Sicherheitskupplung, bei der die einzelnen Elemente im Schnitt dargestellt sind;
- Figur 3: eine Frontalansicht auf ein Sperrelement und
- Figur 4: einen Schnitt durch dasselbe Sperrelement entlang der Linie A-A nach Figur 3;
- Figur 5: zeigt eine Seitenansicht eines Steckers passend zu einem Sperrelement gemäss den Figuren 3 und 4;
- Figur 6: zeigt einen Vertikalschnitt entlang der Linie A-A und
- Figur 7: einen Vertikalschnitt entlang der Linie B-B wie in der Figur 5 eingezeichnet.
- Figuren 8 bis 10: zeigen die Sicherheitskupplung in drei verschiedenen Funktionspositionen;
- Figuren 11 und 12: zeigen eine Variante der Sicherheitskupplung mit einer schwenkbaren Schutzkappe und
- Figur 13: ein Detail der Sicherheitskupplung gemäss einer weiteren Variante in grösserem Maßstab.

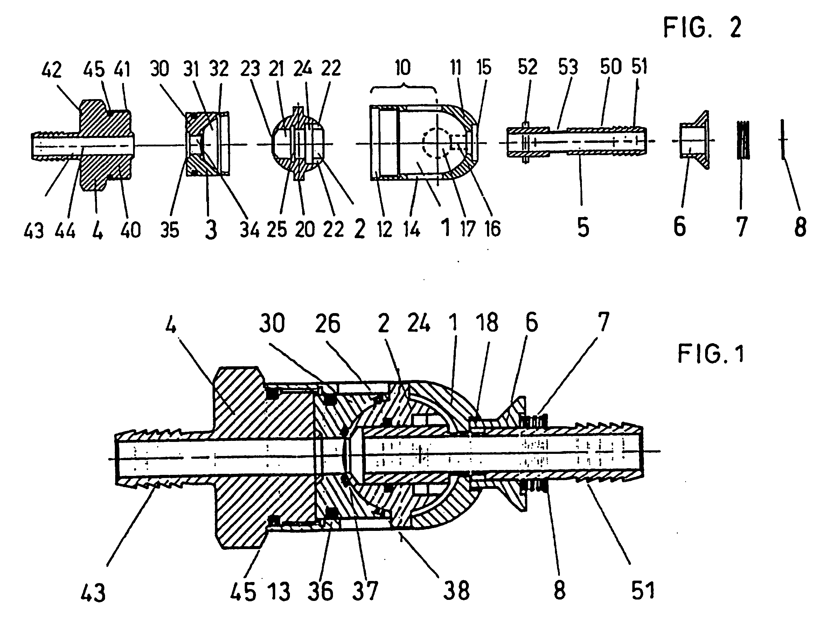

In Figur 1 ist die gesamte steckbare Sicherheitskupplung im zusammengebauten Zustand in einem axialen Längsschnitt gezeigt, wobei der Schnitt in der Ebene gelegt ist, in der die Schwenkachse eines Sperrelementes verläuft. Die wesentlichsten Bauelemente der erfindungsgemässen Sicherheitskupplung sind in der Figur 2 einzeln im Schnitt dargestellt. Die eigentliche Kupplung besteht im wesentlichen aus vier Elementen. Dies ist ein Kupplungsgehäuse 1, ein Sperrelement 2, welches in einer Lagerschale 3 dichtend ruht und ein schraubbarer Stopfen 4, der das Kupplungsgehäuse 1 verschliesst und die einzelnen Elemente in ihrer axialen Position sichert. Mit 5 ist der eigentliche Kupplungsstecker bezeichnet, der zusätzlich mit einer Verriegelungshülse 6 versehen sein kann, auf die eine Feder 7 wirkt, die sich an einem Sicherungsring 8 abstützt.

Das Kupplungsgehäuse 1 hat einen zylindrischen Wandabschnitt 10, der einseitig kuppelartig zusammenläuft. Dieser Teil wird nachfolgend Kopfteil 11 genannt. Das offene Ende des zylindrischen Wandabschnittes 10 hat einen gewindefreien Dichtbereich 12, an den ein Bereich mit Innengewinde 13 anschliesst. Im zylindrischen Wandabschnitt 10 sind zwei einander diametral gegenüber liegende Langlöcher 14 eingeformt, die gleichzeitig der Montage des hier dargestellten Sperrelementes 2 dienen und andererseits die Lager der diametralen Schwenkachse des Sperrelementes 2 bilden. Im Zenit des kuppelförmigen Kopfteiles 11 ist eine Steckerdurchführungsöffnung 15 eingeformt. Diese Steckerdurchführungsöffnung 15 stellt das eine Ende einer Schwenkbahn 16 dar, die in eine erweiterte Oeffnung übergeht, welche die Steckereinführungsöffnung darstellt.

Wie bereits erwähnt, liegt innerhalb des Steckergehäuses 1 das Sperrelement 2. Dieses besteht im wesentlichen aus einer sphärischen Kugel und besitzt eine Schwenkachse 20. Die Schwenkachse 20 durchsetzt die Sphäre diametral. Eine Durchgangsbohrung 21 verläuft ebenfalls diametral und senkrecht zur Schwenkachse 20 quer durch das Sperrelement 2. Die Durchgangsbohrung 21 ist zu einer Lufteintrittsöffnung 23 verengt. Das gegenüber liegende Ende der Durchgangsbohrung 21 dient der Einführung des Kupplungssteckers 5. Im Bereich der Einführungsseite für den Stecker sind Einführungsausnehmungen 22, die einander diametral gegenüberliegend sind, dargestellt. Diese Einführungsausnehmungen 22 münden in eine Ringnut 24. Die Einführungsausnehmungen 22 und die Ringnut 24 bilden Verriegelungsmittel im Sperrelement 2. Diese wirken zusammen mit entsprechenden Sperrmitteln am Stecker 5, die noch zu beschreiben sind. Ferner ist in der Durchgangsbohrung 21 eine weitere Ringnut 25 erkennbar, die zur Einlage eines Dichtringes 26 dient. Während somit die Ringnut 24 eine Verriegelungsnut ist, dient die Ringnut 25 lediglich der Einlage des Dichtringes 26. Dieser Dichtring 26 dichtet das Sperrelement 2 gegenüber dem Stecker 5 im eingeführten Zustand.

Das Sperrelement 2 liegt dichtend und schwenkbar in der Lagerschale 3. Die Lagerschale 3 hat die Form eines Zylinderabschnittes 30, in dem einseitig eine kalottenförmige Vertiefung 31 eingelassen ist. Die kalottenförmige Vertiefung 31 bildet die eigentliche Lagerfläche für das schwenkbare Sperrelement 2. In dieser Lagerfläche ist mindestens eine ringförmige Nut 32 eingelassen, die der Aufnahme eines weiteren Dichtringes 33 dient. Eine zentrische, axiale Bohrung 34 bildet die Lufteintrittsöffnung, die im leitenden Zustand mit der Durchgangsbohrung 21 fluchtet. Die axiale Bohrung 34 hat eine geringe konische Erweiterung 35.

Bei der Montage der erfindungsgemässen Sicherheitskupplung legt man folglich zuerst das Sperrelement 2 in das Kupplungsgehäuse 1 ein, bis die Schwenkachse 20 in den diametralen Langlöchern 14 lagert. Hierauf schiebt man die Lagerschale 3 ein. Durch das Aufschrauben des Stopfens 4 drückt die Lagerschale 3 das Sperrelement 2 in die korrekte Endlage. Der schraubbare Stopfen 4 hat die Form einer Schraube mit einem Aussengewinde 41, das auf dem bolzenförmigen Körper 40 angebracht ist. Zur Befestigung dient ein mehreckiger Schraubenkopf 42. Der bolzenförmige Körper 40 und der Schraubenkopf 42 werden von einer Luftzufuhrbohrung 44 axial durchsetzt. Ein gezahnter Schlauchaufstecknippel 43 bildet die Verlängerung der Luftzufuhrbohrung 44.

Wie bereits erwähnt, nimmt das Sperrelement 2 den Kupplungsstecker 5 teilweise auf. Der Kupplungsstecker 5 besteht im wesentlichen aus einem zylindrischen Rohrabschnitt 50. Das ausgangsseitige Ende dieses Rohrabschnittes 50 ist als gezahnter Schlauchaufstecknippel 51 gestaltet. Am einführungsseitigen Ende weist der Rohrabschnitt 50 ein Verriegelungsmittel in der Form eines Verriegelungsbolzens 52 auf. Der Verriegelungsbolzen 52 kann, wie hier dargestellt, als ein den Kupplungsstecker 5 diametral und senkrecht zur Achsrichtung durchsetzender Stift gestaltet sein. Es ist jedoch auch möglich, lediglich zwei nach aussen vorstehende Bolzenabschnitte an den Stecker anzuformen. Dieser Verriegelungsbolzen 52 ist so bemessen, dass die vorstehenden Teile in die Einführungsausnehmungen 22 einführbar sind und danach durch Verdrehung des Kupplungssteckers in die Verriegelungsnut 24 zu liegen kommen. Damit ist eine bajonettartige Verriegelung zwischen Kupplungsstecker und Sperrelement 2 möglich.
Der Kupplungsstecker 5 weist in einem mittleren Bereich zwei einander diametral gegenüber liegende Einfräsungen 53 auf. Der Durchmesser des rohrförmigen Abschnittes 50 ist im Bereich der Einfräsungen 53 so reduziert, dass er der Weite der Schwenkbahn 16 entspricht. Dies stellt sicher, dass die Schwenkbewegung des Kupplungssteckers erst erfolgen kann, wenn der Kupplungsstecker um einen vorgegebenen Winkel verdreht worden ist. Tatsächlich sind die Einfräsungen 53 und der Verriegelungsbolzen 52 um 90° zueinander verdreht. In der Figur 2 ist dies mit Absicht falsch dargestellt, um in einer einzigen Figur sowohl den Verriegelungsbolzen 52 als auch die Einfräsungen 53 sichtbar zu machen.

In den dargestellten Lösungen ist im Sperrelement 2 in dessen Durchgangsbohrung eine Ringnut 25 eingelassen, in der ein Dichtring 26 eingelegt ist. Natürlich kann aber auch die Dichtung zwischen Sperrelement 2 und Kupplungsstecker 5 durch eine Ringnut im Rohrabschnitt 50 und darin eingelegten Dichtring erfolgen. Diese Lösung ist hier nicht dargestellt.

Auf dem Rohrabschnitt ist des weiteren eine Verriegelungshülse 6 gehalten. Diese Verriegelungshülse 6 wird im gekoppelten Zustand zum Kupplungsgehäuse 1 hin gedrückt. Hierzu ist eine Druckfeder 7 vorgesehen, die mit einem Sicherungsring 8 auf dem Kupplungsstecker 5 gehalten ist.

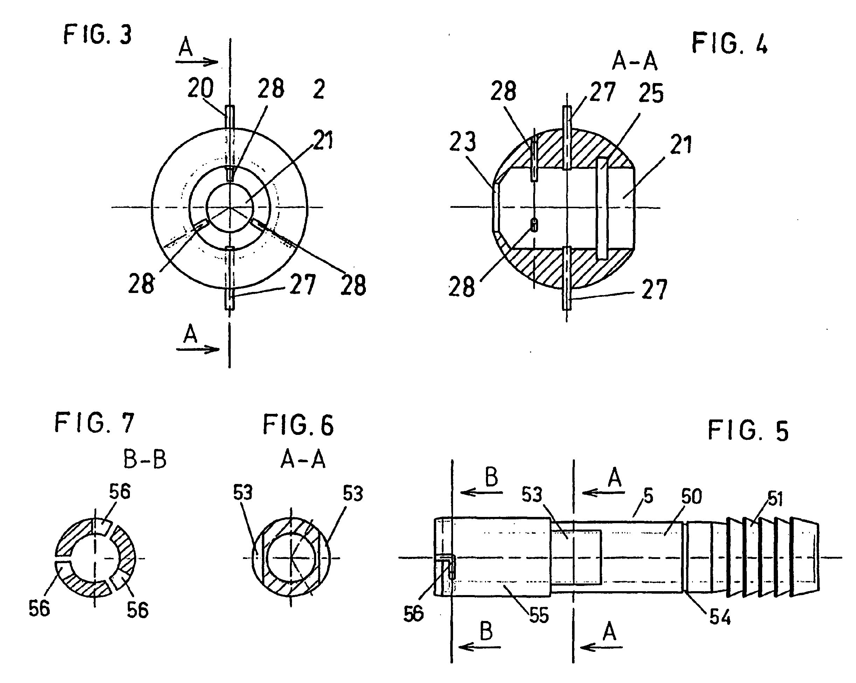

Eine Variante der Verriegelungsmöglichkeiten zwischen dem Sperrelement 2 und dem Kupplungsstecker 5 ist an Hand der Figuren 3 bis 7 dargestellt. Auch hier ist das Sperrelement 2 in der Form einer Kugel gestaltet. Die Schwenkachse 20 ist hier jedoch nicht einstückig aus dem gleichen Material geformt wie das Sperrelement selber, sondern aus zwei einander diametral gegenüber liegenden Achsbolzenabschnitten 27 gestaltet. Dies erlaubt, auch das Kupplungsgehäuse 1 vereinfacht herzustellen, indem in diesem Falle auf die Langlöcher 14 verzichtet werden kann und statt dessen lediglich eine diametrale Bohrung vorgesehen werden muss. Bei der Montage müssen lediglich das Kupplungsgehäuse 1 und das Sperrelement 2 lagepositioniert werden, worauf dann die beiden Achsbolzenabschnitte 27 eingestossen werden können. Prinzipiell ist es auch denkbar, statt zwei Achsbolzenabschnitten 27 eine durchgehende Achse einzuschieben.

Bei der hier dargestellten Ausführungsform ist auch die Verriegelung zwischen Sperrelement 2 und Kupplungsstecker 5 fertigungstechnisch vereinfacht. So fehlen hier die beiden einander diametral gegenüber liegenden Einführungsausnehmungen 22 und statt dessen sind mehrere auf die Achse der Durchgangsbohrung 21 ausgerichtete Verriegelungsbolzen 28, die in einer zur erwähnten Achse senkrechten Ebene verlaufend angeordnet sind, in entsprechende Bohrungen eingepresst. Die Ringnut 25, die zur Einlegung eines Dichtringes dient, ist gegenüber der Ausführung nach Figur 2 näher zur Kupplungssteckereinführungsseite hin verschoben angeordnet.

Ein auf das Sperrelement gemäss den Figuren 3 und 4 angepasster Kupplungsstecker 5 ist in den Figuren 5 bis 7 dargestellt. Völlig analog der Ausführung gemäss der Figur 2 besteht auch hier der Kupplungsstecker 5 aus einem Rohrabschnitt 50. Ausgangsseitig ist dieser Rohrabschnitt 50 in einen gezahnten Schlauchaufstecknippel 51 geformt. Eine Einkerbung 54 dient zur Halterung der Sicherungsscheibe 8. Auch hier sind wiederum Einfräsungen 53 vorgesehen, die, wie erwähnt, eine Verschwenkung des Kupplungssteckers 5 nur zulassen, wenn dieser um einen vorbestimmten Winkel gedreht worden ist und dabei sichergestellt ist, dass die Verriegelungsteile im Eingriff sind. Erst dann kann der Stecker 5 in der Schwenkbahn 16 bewegt werden. Der in das Sperrelement 2 einführbare Teil des Kupplungssteckers 5 weist eine Verdickung 55 auf. An Stelle des Verriegelungsbolzens 52 tritt bei dieser Version eine entsprechende ausgenommene Verriegelungsbahn 56. Dabei sind genau so viele Verriegelungsbahnen. 56 vorgesehen, wie Verriegelungsbolzen 28 im Sperrorgan 2 vorhanden sind. Im vorliegenden Beispiel sind dies drei Verriegelungsbolzen 28 und entsprechend drei Verriegelungsbahnen 56. Auch hier sind die Verriegelungsbahnen ähnlich wie bei einem Bajonettverschluss gestaltet.

Obwohl eine solche Ausführungsform in der Zeichnung nicht dargestellt ist, ist es durchaus möglich, das Sperrelement statt sphärisch auch zylindrisch zu gestalten. In einem solchen Fall kann, wie im dargestellten Beispiel, das Sperrelement 2 eine entsprechende Schwenkachse haben oder diese kann auch nur virtuell vorhanden sein, während der Sperrkörper selber im Prinzip die Schwenkachse bildet. Bei einer solchen Ausführungsform würde man selbstverständlich auch die äussere Gestaltung des Kupplungsgehäuses 1 entsprechend anpassen.

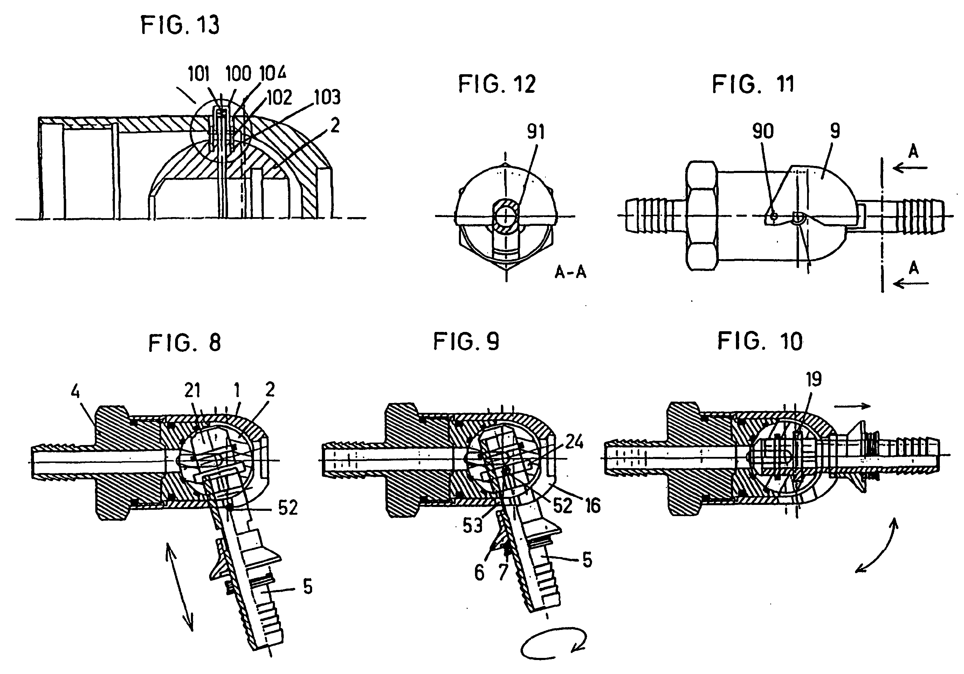

An Hand der Figuren 8 bis 10 ist nun kurz die Funktion der erfindungsgemässen steckbaren Sicherheitskupplung erläutert. In der Figur 8 ist jene Position gezeigt, in welcher der Kupplungsstecker 5 eingeführt beziehungsweise herausgezogen werden kann. In der hier dargestellten Position ist der Stecker 5 erst teilweise in das Sperrelement 2 in dessen Durchgangsbohrung 21 eingeführt. Der Verriegelungsbolzen 52 greift hierbei während der Einführung in die Einführungsausnehmungen 22.

Ist der Kupplungsstecker 5 vollständig in das Sperrorgan 2 beziehungsweise dessen Durchgangsbohrung 21 eingeschoben, so Durchgangsbohrung 21 eingeführt. Der Verriegelungsbolzen 52 greift hierbei während der Einführung in die Einführungsausnehmungen 22.

Ist der Kupplungsstecker 5 vollständig in das Sperrorgan 2 beziehungsweise dessen Durchgangsbohrung 21 eingeschoben, so lässt er sich um seine Längsachse drehen. Bei der Drehung kommt nun der Verriegelungsbolzen 52 in die Verriegelungsnut 24 und gelangen die Einfräsungen 53 in die Schwenkbahn ausgerichtete Position. In der Figur 9 ist der Kupplungsstecker 5 in der noch nicht gedrehten Lage dargestellt. Die Verriegelungshülse 6 liegt in dieser Lage unter Druck der Druckfeder 7 seitlich der Schwenkbahn 16 auf dem Kupplungsgehäuse 1 auf. Während der Schwenkung ist nun der Stecker mit seinem Bolzen 52 in der Verriegelungsnut gegen Herausdrücken gesichert. Sogar wenn dieser Bolzen brechen sollte, wird dann der Druck des Steckers aufgefangen, weil dann die Einfräsungen 53 am Kupplungsgehäuse anzuliegen kommen. Nach der Drehung des Verriegelungssteckers 5 kann somit die Schwenkbewegung durchgeführt werden, bis der Kupplungsstecker 5 genau fluchtend auf die Luftzuführungsbohrung 44 des schraubbaren Stopfens 4 ausgerichtet ist. In dieser Position liegen somit die Luftzuführungsbohrung 44, die axiale Bohrung 34 in der Lagerschale 3 und die Durchgangsbohrung 21 im Sperrelement 2 zusammen mit dem Rohrabschnitt 50 des Kupplungssteckers 5 in axial fluchtender Ausrichtung aufeinander. In dieser Position vermag nun die Verriegelungshülse 6 in einer Verriegelungsvertiefung 18 einzurasten. Damit ist die Lage des Kupplungssteckers relativ zum Kupplungsgehäuse 1 gesichert und gleichzeitig die Lage des schwenkbaren Sperrelementes 2 im Innenraum des Kupplungsgehäuses 1.

Dem aufmerksamen Betrachter fällt selbstverständlich sofort auf, dass das Sperrelement 2 ausgangsseitig gegenüber dem Kupplungsgehäuse 1 nicht abgedichtet ist. Vielmehr ist sogar ein spaltförmiger Zwischenraum 19 erkennbar. Wie eingangs erwähnt soll die erfindungsgemässe Kupplung auch unter der Last der anliegenden Druckluft leicht entkoppelt werden können. Dies ist problemlos möglich. Die auf den Kupplungsstecker 5 anliegende Kraft wird im Sperrelement 2 durch den Verriegelungsbolzen 52, der in der Verriegelungsnut 24 liegt, vollständig abgefangen. Zum Verschwenken des Kupplungssteckers 5 muss folglich diese Kraft nicht überwunden werden. Schwenkt man unter Last den Kupplungsstecker 5 von der Position, wie in Figur 10 dargestellt, zurück in die Position nach Position 8, so kommt die Lufteintrittsöffnung 23 vorerst von einer leitenden Position in eine dichtende Position gegenüber der Lagerschale 3, worauf in der vollständig geschwenkten Lage die Lufteintrittsöffnung 23 des Sperrelementes 2 in kommunizierende Verbindung mit dem spaltförmigen Zwischenraum 19 gelangt. Dabei kann nun der noch im Schlauch vorhandene Druck entlastet werden, indem die Luft in den Zwischenraum 19 und von dort aus dem Kupplungsgehäuse 1 entweichen kann. Dabei besteht nicht die Gefahr, dass der Kupplungsstecker 5 aus dem Kupplungsgehäuse 1 hinaus geschleudert werden kann, weil die Verriegelungselemente 24,52 immer noch miteinander im Eingriff stehen. Ist der Restdruck abgebaut, so lässt sich auch der Kupplungsstecker ohne Kraftaufwand drehen und wieder herausziehen.

Da, wie bereits erwähnt, die erfindungsgemässe Sicherheitssteckkupplung auch auf dem Bau zur Anwendung kommen soll, ist es sinnvoll, die Kupplung gegen Verschmutzung zu sichern. In den Figuren 11 und 12 ist entsprechend eine Lösung dargestellt, bei der am Kupplungsgehäuse 1 eine Kappe 9 um eine Achse 90 schwenkbar angeordnet ist. Die Kappe 9 kann gleichzeitig die Funktion der Verriegelungshülse 6 ersetzen, wenn man die Kappe mit entsprechenden formschlüssigen Ausnehmungen 91 versieht.

In der Figur 13 ist schliesslich eine weitere Variante der Verriegelung des Sperrelementes 2 in der leitenden Position und in der Einführungsposition dargestellt. Dies erfolgt über eine um die Schwenkachse angeordnete Schwenklagerbuchse, die in axialer Richtung verschiebbar ist. Diese Lagerbuchse 10 nimmt eine Druckfeder 101 auf. Die Buchse ist mit Arretierbolzen 102 versehen, die in seitlichen Ausnehmungen 104 im Kupplungsgehäuse 1 und in entsprechenden Bohrungen 103 im Sperrelement 2 eingreifen. Die Bolzen 102 sind mit der Lagerhülse 100 fest verbunden. Drückt man auf die Lagerhülse 100, so wird die Feder 101 zusammengedrückt, die Bolzen sind in den seitlichen Ausnehmungen 104 nicht mehr im Eingriff und das Sperrelement 2 lässt sich verschwenken. Während der Schwenkung können die Verriegelungsbolzen 102 auf der Innenseite des Kupplungsgehäuses 1 aufliegen und sobald das Sperrelement 2 die Lage entsprechend der Figur 5 erreicht hat, schnappen die Verriegelungsbolzen 102 in entsprechenden Ausnehmungen 104 wiederum ein, womit das Sperrelement 2 wiederum in einer verriegelten, definierten Position gehalten ist.

## Patentansprüche

1. Steckbare Sicherheitskupplung für Druckleitungen, mit einem Kupplungsstecker (5) und einem Kupplungsgehäuse (1) mit Druckluftzuführungsbohrung (44), wobei im Kupplungsgehäuse ein Sperrelement (2) mit Durchgangsbohrung (21) dichtend gelagert ist, in die der Kupplungsstecker (5) dichtend einführbar ist, und wobei ferner das Kupplungsgehäuse (1) eine als Kulissenführung des Kupplungssteckers dienende Ausnehmung aufweist, die im gekuppelten Zustand eine Schwenkbewegung des Kupplungssteckers ermöglicht und damit das Sperrelement von einer leitenden Position, in der die Durchgangsbohrung (21) des Sperrelementes (2) mit der Druckluftzuführungsbohrung (44) kommuniziert, in eine sperrende Position, in der das Sperrelement (2) die Druckluftzuführungsbohrung (44) sperrt, bringbar ist, **dadurch gekennzeichnet, dass** das Sperrelement (2) und der Kupplungsstecker (5) aufeinander abgestimmte Verriegelungsmittel (24, 52; 28, 56) aufweisen, die eine verriegelte Halterung des Kupplungssteckers (5) im Sperrelement (2) bewirken und somit der anliegende Druck am Kupplungsstecker (5) im Sperrelement (2) aufgefangen wird.

2. Sicherheitskupplung nach Anspruch 1, **dadurch gekennzeichnet, dass** das Sperrelement (2) eine zylindrische Form hat.

3. Sicherheitskupplung nach Anspruch 1, **dadurch gekennzeichnet, dass** das Sperrelement (2) eine im wesentlichen sphärische Form hat und eine Schwenkachse (20) aufweist.

4. Sicherheitskupplung nach Anspruch 3, **dadurch gekennzeichnet, dass** die Schwenkachse (20) durch zwei angeformte Achsbolzen gebildet ist.

5. Sicherheitskupplung nach Anspruch 3, **dadurch gekennzeichnet, dass** die Schwenkachse (20) durch einen das Sperrelement querenden Achsstift gebildet ist.

6. Sicherheitskupplung nach Anspruch 3, **dadurch gekennzeichnet, dass** die Schwenkachse (20) durch zwei einander gegenüberliegende Achsbolzenabschnitte (27) gebildet ist, die im Sperrkörper befestigt sind.

7. Sicherheitskupplung nach Anspruch 1, **dadurch gekennzeichnet, dass** das Kupplungsgehäuse (1) eingangsseitig mit einem dichtenden Stopfen (4) mit durchgehender Druckluftzuführungsbohrung (44) versehen ist, der mit einer Leitung in Verbindung steht.

8. Sicherheitskupplung nach Anspruch 7, **dadurch gekennzeichnet, dass** zwischen dem Sperrelement (2) und dem Stopfen (4) eine Lagerschale (3) mit sphärischer Lagerfläche dichtend im Kupplungsgehäuse (1) gelagert ist, wobei die Lagerschale (3) eine mit der Druckluftzuführungsbohrung (44) kommunizierende axiale Durchführungsbohrung (34) aufweist.

9. Sicherheitskupplung nach Anspruch 8, **dadurch gekennzeichnet, dass** der dichtende Stopfen (4) die Lagerschale (3) direkt oder mittelbar an das Sperrelement (2) drückt.

10. Sicherheitskupplung nach Anspruch 8, **dadurch gekennzeichnet, dass** die Lagerschale (3) mindestens eine Ringnut (37, 38) in der Lagerfläche aufweist, die die Durchführungsbohrung (34) umgibt und in der eine Dichtung eingelegt ist.

11. Sicherheitskupplung nach den Ansprüchen 3 und 8, **dadurch gekennzeichnet, dass** die Lagerschale (3) eine kugelkalottenförmige Lagerfläche (31) aufweist.

12. Sicherheitskupplung nach Anspruch 11, **dadurch gekennzeichnet, dass** das Kupplungsgehäuse (1) an der dem Stopfen (4) gegenüberliegenden Seite innen eine Kuppelform aufweist, wobei der Radius der Kuppel grösser ist als der Radius der Lagerfläche der Lagerschale (3), so dass zwischen der Kuppel und dem Sperrelement ein Zwischenraum verbleibt.

13. Sicherheitskupplung nach Anspruch 11, **dadurch gekennzeichnet, dass** das Kupplungsgehäuse (1) an der dem Stopfen (4) gegenüberliegenden Seite innen eine Kuppelform aufweist, wobei der Radius der Kuppel dem Radius des sphärischen Sperrelementes (2) entspricht, wobei jedoch die Zentren beider Teile so verschoben sind, dass zwischen der Kuppel und dem Sperrelement (2) ein Zwischenraum verbleibt.

14. Sicherheitskupplung nach Anspruch 11, **dadurch gekennzeichnet, dass** das Kupplungsgehäuse (1) zwei einander gegenüberliegende Langlöcher (14) aufweist, in denen die Schwenkachse (20) des Sperrelementes (2) liegt.

15. Sicherheitskupplung nach Anspruch 1, **dadurch gekennzeichnet, dass** im Sperrelement (2) mindestens ein in die Durchgangsbohrung (21) ragender Arretierstift (28) vorhanden ist.

16. Sicherheitskupplung nach Anspruch 15, **dadurch gekennzeichnet, dass** drei gleichmässig am Umfang verteilte Arretierstifte (28) vorhanden sind.

17. Sicherheitskupplung nach Anspruch 15, **dadurch gekennzeichnet, dass** der Kupplungsstecker (5) am einführungsseitigen Ende eine axial verlaufende auf den mindestens einen Arretierstift ausgerichtete Ausnehmung aufweist, die in eine radial verlaufende Ausnehmung übergeht und folglich eine Verriegelungsbahn (56) bildet, die eine bajonettartige Verriegelung erlaubt.

18. Sicherheitskupplung nach Anspruch 1, **dadurch gekennzeichnet, dass** in der Durchgangsbohrung (21) im Sperrelement (2) auf der Steckereinführungsseite mindestens eine axial verlaufende Ausnehmung (22) vorhanden ist, die in eine radial verlaufende Ausnehmung (24) übergeht.

19. Sicherheitskupplung nach Anspruch 18, **dadurch gekennzeichnet, dass** der Kupplungsstecker (5) mindestens einen Arretierstift (52) oder -zapfen aufweist, der in die Ausnehmung (22, 24) im Sperrelement (2) eingreift.

20. Sicherheitskupplung nach Anspruch 19, **dadurch gekennzeichnet, dass** der Kupplungsstecker (5) mit einem ihn querenden Arretierstift versehen ist.

21. Sicherheitskupplung nach Anspruch 19, **dadurch gekennzeichnet, dass** der Kupplungsstecker (5) mit zwei oder mehr radial und axial zueinander versetzten Arretierstiften (52) versehen ist, die den Stecker durchsetzen.

22. Sicherheitskupplung nach Anspruch 19, **dadurch gekennzeichnet, dass** am Kupplungsstecker (5) mehrere radial versetzte an der Aussenfläche angeformte Arretierzapfen vorhanden sind.

23. Sicherheitskupplung nach Anspruch 1, **dadurch gekennzeichnet, dass** die Kulissenführung eine erweiterte Einführungsöffnung (17) in der Entkopplungsstellung aufweist und in eine gegenüber dem Durchmesser der Einführungsöffnung schmälere Schwenkbahn (16) übergeht.

24. Sicherheitskupplung nach Anspruch 23, **dadurch gekennzeichnet, dass** der Kupplungsstecker (5) zwei einander gegenüberliegende Einfräsungen (53) aufweist, so dass die Weite des Kupplungssteckers im Bereich der Einfräsungen (53) geringer ist als die Weite der Schwenkbahn (16).

25. Sicherheitskupplung nach Anspruch 1, **dadurch gekennzeichnet, dass** im Kupplungsgehäuse (1) in der leitenden Position in der Aussenfläche eine Verriegelungsvertiefung (18) angebracht ist, in der eine am Kupplungsstecker angebrachte, federbelastete (7) Verriegelungshülse (6) formschlüssig eingreift.

26. Sicherheitskupplung nach Anspruch 1, **dadurch gekennzeichnet, dass** das Kupplungsgehäuse (1) mit einer schwenkbaren Kappe (9) versehen ist, die eine die Kulissenführung bildende Ausnehmung (16, 17) im entkoppelten Zustand weitgehend abdeckt.

27. Sicherheitskupplung nach Anspruch 26, **dadurch gekennzeichnet, dass** die schwenkbare Kappe (9) unter Federkraft selbsttätig in die abdeckende Position gelangt.

28. Sicherheitskupplung nach Anspruch 26, **dadurch gekennzeichnet dass** das Sperrelement (2) eine aus dem Kupplungsgehäuse (1) mindestens einseitig vorstehende Achse aufweist, die mit Arretierflächen versehen ist, die mit entsprechenden Ausnehmungen (91) an der Kappe zusammenwirkend eine zusätzliche Verdrehsicherung bilden (Fig. 11).

29. Sicherheitskupplung nach Anspruch 3, **dadurch gekennzeichnet dass** mindestens einseitig das Schwenklager (20) in einer Lagerbuchse (10) liegt, die unter Federdruck (101) in axialer Richtung verschiebbar ist, wobei an der Lagerbuchse Bolzen (102) gehalten sind, die im sperrenden Zustand in seitliche Einnehmungen (104) des Kupplungsgehäuses (1) und in passenden Bohrungen (103) im Sperrelement (2) eingreifen.

30. Sicherheitskupplung nach Anspruch 1, **dadurch gekennzeichnet dass** der Kupplungsstecker (5) mindestens einen Dichtring aufweist, mittels dem der Stecker (5) zum Sperrelement (2) abdichtbar ist.

## Claims

1. A plug-in safety coupling for pressure conduits, comprising a coupling plug (5) and a coupling housing (1) having a compressed-air feed bore (44), wherein a blocking element (2) having a through-bore (21) is sealingly mounted in the coupling housing, into which through-bore the coupling plug (5) may be sealingly introduced, and wherein further the coupling housing (1) has a recess which serves as a slot guide for the coupling plug and which, in the coupled condition, permits a pivotal movement of the coupling plug to allow the blocking element to be moved from a conducting position in which the through-bore (21) of the blocking element (2) communicates with the compressed-air feed bore (44), to a blocking position in which the blocking element (2) blocks the compressed-air feed bore (44), **characterised in that** the blocking element (2) and the coupling plug (5) have mutually matching locking means (24, 52; 28, 56) which effect a locked retention of the coupling plug (5) in the blocking element (2) whereby the pressure acting on the coupling plug (5) is accommodated by the blocking element (2).

2. The safety coupling of claim 1, **characterised in that** the blocking element (2) has a cylindrical shape.

3. The safety coupling of claim 1, **characterised in that** the blocking element (2) has an essentially spherical shape and a pivot (20).

4. The safety coupling of claim 3, **characterised in that** the pivot (20) is formed by two integral journals.

5. The safety coupling of claim 3, **characterised in that** the pivot (20) is formed by a pivot pin crossing the blocking element.

6. The safety coupling of claim 3, **characterised in that** the pivot (20) is formed by two journal sections (27) which are arranged opposite one another and are fixed in the blocking body.

7. The safety coupling of claim 1, **characterised in that** the entry side of the coupling housing (1) is provided with a sealing stopper (4) having a compressed-air feed through-bore (44) communicating with a conduit.

8. The safety coupling of claim 7, **characterised in that** a bearing shell (3) having a spherical bearing surface is sealingly mounted in the coupling housing (1) between the blocking element (2) and the stopper (4), wherein the bearing shell (3) has an axial through-bore (34) communicating with the compressed-air feed bore (44).

9. The safety coupling of claim 8, **characterised in that** the sealing stopper (4) directly or indirectly presses the bearing shell (3) onto the blocking element (2).

10. The safety coupling of claim 8, **characterised in that** the bearing shell (3) has at least one annular groove (37, 38) in the bearing surface, which surrounds the through-bore (34) and in which a seal is placed.

11. The safety coupling of claims 3 and 8, **characterised in that** the bearing shell (3) has a spherical calotte-shaped bearing surface (31).

12. The safety coupling of claim 11, **characterised in that** the coupling housing (1), at the side opposite the stopper (4), has an inner dome shape, wherein the radius of the dome is larger than the radius of the bearing surface of the bearing shell (3) to leave a space between the dome and the blocking element.

13. The safety coupling of claim 11, **characterised in that** the coupling housing (1), at the side opposite the stopper (4), has an inner dome shape, wherein the radius of the dome corresponds to the radius of the spherical blocking element (2), with the centres of the two parts being displaced to leave a space between the dome and the blocking element (2).

14. The safety coupling of claim 11, **characterised in that** the coupling housing (1) has two elongate holes (14) disposed opposite one another and accommodating the pivot (20) of the blocking element (2).

15. The safety coupling of claim 1, **characterised in that** the blocking element (2) includes at least one locking pin (28) projecting into the through-bore (21).

16. The safety coupling of claim 15, **characterised in that** there are three locking pins (28) distributed uniformly along the circumference.

17. The safety coupling of claim 15, **characterised in that** the insertion end of the coupling plug (5) has an axially extending recess which is aligned with the at least one locking pin and which merges into a radially extending recess to form a locking path (56) for permitting a bayonet-like locking.

18. The safety coupling of claim 1, **characterised in that** at least one axially extending recess (22) which merges into a extending running recess (24) is provided in the through-bore (21) of the blocking element (2) on the plug insertion side.

19. The safety coupling of claim 18, **characterised in that** the coupling plug (5) includes at least one locking pin (52) or peg which engages in the recess (22, 24) provided in the blocking element (2).

20. The safety coupling of claim 19, **characterised in that** the coupling plug (5) is provided with a locking pin crossing it.

21. The safety coupling of claim 19, **characterised in that** the coupling plug (5) is provided with two or more locking pins (52) which are mutually displaced radially and axially and which extend through the plug.

22. The safety coupling of claim 19, **characterised in that** a plurality of radially displaced locking pegs are integrally formed on the outer surface on the coupling plug (5).

23. The safety coupling of claim 1, **characterised in that** the slot guide has an enlarged insertion opening (17) in the decoupled position and merges into a pivot path (16) which is narrower than the diameter of the insertion opening.

24. The safety coupling of claim 23, **characterised in that** the coupling plug (5) comprises two milled recesses (53) disposed opposite one another so that the width of the coupling plug in the region of the milled recesses (53) is smaller than the width of the pivot path (16).

25. The safety coupling of claim 1, **characterised in that**, in the conducting position, a locking recess (18) is formed in the outer surface of the coupling housing (1) which recess is engaged with a positive fit by a spring-biased (7) locking sleeve (6) attached on the coupling plug.

26. The safety coupling of claim 1, **characterised in that** the coupling housing (1) is provided with a pivotable cap (9) which, in the decoupled condition, largely covers a recess (16, 17) forming the slot guide.

27. The safety coupling of claim 26, **characterised in that** the pivotable cap (9) automatically moves into the covering position under spring force.

28. The safety coupling of claim 26, **characterised in that** the blocking element (2) includes a pivot which projects at least at one side out of the coupling housing (1) and is provided with locking surfaces which cooperate with corresponding recesses (91) in the cap to form an additional securement against rotation (Fig. 11).

29. The safety coupling of claim 3, **characterised in that** the pivot bearing (20), at least at one side, rests in a bearing bushing (10) which is axially displaceable under spring pressure (101), wherein bolts (102) are held on the bearing bushing which bolts, in the blocking condition, engage in lateral recesses (104) of the coupling housing (1) and fitting bores (103) in the blocking element (2).

30. The safety coupling of claim 1, **characterised in that** the coupling plug (5) includes at least one sealing ring by means of which the plug (5) may be sealed to the blocking element (2).

## Revendications

1. Raccord de sécurité enfichable pour conduites sous pression, avec une fiche de raccord (5) et un boîtier de raccord (1) avec un trou d'amenée d'air comprimé (44), sachant qu'un élément d'obturation (2) avec un trou traversant (21) est monté de manière étanche dans le boîtier de raccord, dans lequel trou traversant la fiche de raccord (5) peut être enfichée de manière étanché, et sachant qu'en outre le boîtier de raccord (1) comporte un évidement servant de guide à coulisse de la fiche de raccord, lequel évidement permet à l'état raccordé un mouvement de basculement de la fiche de raccord et ainsi l'élément d'obturation peut être amené d'une position de conduction, dans laquelle le trou traversant (21) de l'élément d'obturation (2) communique avec le trou d'amenée d'air comprimé (44), dans une position d'obturation, dans laquelle l'élément d'obturation (2) ferme le trou d'amenée d'air comprimé (44), **caractérisé en ce que** l'élément d'obturation (2) et la fiche de raccord (5) comportent des moyens de verrouillage (24, 52 ; 28, 56), qui provoquent une fixation verrouillée de la fiche de raccord (5) dans l'élément d'obturation (2) et par lesquels la pression exercée sur la fiche de raccord (5) dans l'élément d'obturation (2) est captée.

2. Raccord de sécurité selon la revendication 1, **caractérisé en ce que** l'élément d'obturation (2) a une forme cylindrique.

3. Raccord de sécurité selon la revendication 1, **caractérisé en ce que** l'élément d'obturation (2) a une forme essentiellement sphérique et présente un axe de basculement (20).

4. Raccord de sécurité selon la revendication 3, **caractérisé en ce que** l'axe de basculement (20) est formé par deux tourillons venus de moulage.

5. Raccord de sécurité selon la revendication 3, **caractérisé en ce que** l'axe de basculement (20) est formé par une cheville d'axe traversant l'élément d'obturation.

6. Raccord de sécurité selon la revendication 3, **caractérisé en ce que** l'axe de basculement (20) est formé par deux tronçons de tourillon (27) qui sont fixés dans le corps de verrouillage.

7. Raccord de sécurité selon la revendication 1, **caractérisé en ce que** le boîtier de raccord (1) est doté d'un côté d'un bouchon d'étanchéité (4) avec un trou traversant d'amenée d'air comprimé (44) qui se trouve en communication avec une conduite.

8. Raccord de sécurité selon la revendication 7, **caractérisé en ce qu'**entre l'élément d'obturation (2) et le bouchon (4), un coussinet (3) avec une surface de portée sphérique est monté de manière étanche dans le boîtier de raccord (1), sachant que le coussinet (3) comporte un trou de traversée axial (34) communiquant avec le trou d'amenée d'air comprimé (44).

9. Raccord de sécurité selon la revendication 8, **caractérisé en ce que** le bouchon d'étanchéité (4) presse directement ou indirectement le coussinet (3) contre l'élément d'obturation (2).

10. Raccord de sécurité selon la revendication 8, **caractérisé en ce que** le coussinet (3) comporte dans la surface de portée au moins une rainure périphérique (37, 38) qui entoure le trou de traversée (34) et dans laquelle est placé un joint.

11. Raccord de sécurité selon les revendications 3 et 8, **caractérisé en ce que** le coussinet (3) présente une surface de portée (31) en forme de calotte sphérique:

12. Raccord de sécurité selon la revendication 11, **caractérisé en ce que** le boîtier de raccord (1) présente à l'intérieur, sur le côté opposé au bouchon (4), une forme de coupole, sachant que le rayon de la coupole est plus grand que le rayon de la surface de portée du coussinet (3), de telle sorte qu'il subsiste un espace intermédiaire entre la coupole et l'élément d'obturation.

13. Raccord de sécurité selon la revendication 11, **caractérisé en ce que** le boîtier de raccord (1) présente à l'intérieur, sur le côté opposé au bouchon (4), une forme de coupole, sachant que le rayon de la coupole correspond au rayon de l'élément sphérique d'obturation (2), sachant toutefois que les centres des deux pièces sont décalés de telle sorte qu'il subsiste un espace intermédiaire entre la coupole et l'élément d'obturation.

14. Raccord de sécurité selon la revendication 11, **caractérisé en ce que** le boîtier de raccord (1) comporte deux trous oblongs (14) en vis-à-vis l'un de l'autre, dans lesquels repose l'axe de basculement (20) de l'élément d'obturation (2).

15. Raccord de sécurité selon la revendication 1, **caractérisé en ce qu'**il y a dans l'élément d'obturation (2) au moins une goupille de verrouillage (28) dépassant dans le trou traversant (21).

16. Raccord de sécurité selon la revendication 15, **caractérisé en ce qu'**il y a trois goupilles de verrouillage (28) réparties uniformément à la périphérie.

17. Raccord de sécurité selon la revendication 15, **caractérisé en ce que** la fiche de raccord (5) comporte à l'extrémité d'introduction un évidement s'étendant axialement, dirigé sur l'au moins une goupille de verrouillage, qui se continue par un évidement s'étendant radialement et qui forme par suite une piste de verrouillage (56) qui permet un verrouillage à la manière d'une baïonnette.

18. Raccord de sécurité selon la revendication 1, **caractérisé en ce que**, dans le trou traversant (21) dans l'élément d'obturation (2), il y a au moins un évidement (22) du côté d'introduction de la fiche, s'étendant axialement, qui se poursuit en un évidement (24) s'étendant radialement.

19. Raccord de sécurité selon la revendication 18, **caractérisé en ce que** la fiche de raccord (5) comporte au moins une goupille ou un téton de verrouillage (52), qui vient en prise dans l'évidement (22, 24) dans l'élément d'obturation (2).

20. Raccord de sécurité selon la revendication 19, **caractérisé en ce que** la fiche de raccord (5) est dotée d'une goupille d'arrêt qui la traverse.

21. Raccord de sécurité selon la revendication 19, **caractérisé en ce que** la fiche de raccord (5) est dotée de deux goupilles d'arrêt (52) ou plus, décalées radialement et axialement l'une par rapport à l'autre, qui traversent la fiche.

22. Raccord de sécurité selon la revendication 19, **caractérisé en ce que**, sur la fiche de raccord (5), plusieurs tétons d'arrêt décalés radialement sont venus de moulage sur la surface extérieure.

23. Raccord de sécurité selon la revendication 1, **caractérisé en ce que** le guide à coulisse comporte dans la position débranchée une ouverture d'introduction (17) élargie et se poursuit par une piste de basculement (16) plus étroite en comparaison du diamètre de l'ouverture d'introduction.

24. Raccord de sécurité selon la revendication 23, **caractérisé en ce que** la fiche de raccord (5) comporte deux fraisages (53) en vis-à-vis l'un de l'autre, de telle sorte que, dans la zone des fraisages (53), la largeur de la fiche de raccord est plus petite que la largeur de la piste de basculement (16).

25. Raccord de sécurité selon la revendication 1, **caractérisé en ce qu'**un renfoncement de verrouillage (18) est pratiqué dans le boîtier de raccord (1) dans la position de conduction, dans la surface extérieure, renfoncement dans lequel une douille de verrouillage (6) chargée par un ressort (7), montée sur la fiche de raccord, vient en prise par emboîtement.

26. Raccord de sécurité selon la revendication 1, **caractérisé en ce que** le boîtier de raccord (1) est doté d'un capuchon basculant (9) qui recouvre dans une large mesure dans l'état débranché un évidement (16, 17) formant le guide à coulisse.

27. Raccord de sécurité selon la revendication 26, **caractérisé en ce que** le capuchon basculant (9) accède de lui-même dans la position de recouvrement par la force d'un ressort.

28. Raccord de sécurité selon la revendication 26, **caractérisé en ce que** l'élément d'obturation (2) comporte un axe dépassant au moins d'un côté du boîtier de raccord (1), qui est doté de surfaces d'arrêt qui forment en concours avec des évidements (91) correspondants sur le capuchon une sécurité anti-rotation supplémentaire (figure 11).

29. Raccord de sécurité selon la revendication 3, **caractérisé en ce que** le palier de basculement (20) se trouve au moins d'un côté dans un coussinet de palier (10) qui peut être décalé dans la direction axiale sous la force d'un ressort (101), sachant que des axes (102) sont maintenus sur le coussinet de palier, axes qui viennent en prise dans l'état d'obturation dans des évidements (104) latéraux du boîtier de raccord (1) et dans des trous (103) appropriés dans l'élément d'obturation (2).

30. Raccord de sécurité selon la revendication 1, **caractérisé en ce que** la fiche de raccord (5) comporte au moins une bague d'étanchéité à l'aide de laquelle la fiche (5) peut être étanchée par rapport à l'élément d'obturation (2).
